# EUROPEAN PATENT SPECIFICATION

(11) **EP 1 536 508 B1**
(45) Date of publication and mention of the grant of the patent: **25.06.2014**
(21) Application number: 03788043.2
(22) Date of filing: 06.08.2003
(51) Int. Cl.: H01G 9/20

(54) **IMPROVEMENT OF DYE-SENSITIZED SOLAR CELL**
VERBESSERUNGEN AN EINER FARBSTOFFSENSITIVIERTEN SOLARZELLE
PERFECTIONNEMENT APPORTÉ A UNE CELLULE SOLAIRE SENSIBILISÉE AUX COLORANTS

(30) Priority: 13.08.2002 JP 2002235408; 13.08.2002 JP 2002235393; 13.08.2002 JP 2002235405; 01.10.2002 JP 2002288939; 31.10.2002 JP 2002317340; 12.12.2002 JP 2002361071; 12.12.2002 JP 2002361067; 12.12.2002 JP 2002361068; 12.12.2002 JP 2002361069
(43) Date of publication of application: 01.06.2005
(73) Proprietor: Bridgestone Corporation, Tokyo 104-8340 (JP)
(72) Inventor: YOSHIKAWA, Masato, Kodaira-shi, Tokyo 187-0031 (JP); OHNO, Shingo, Kodaira-shi, Tokyo 187-0031 (JP); KOBAYASHI, Taichi, Kodaira-shi, Tokyo 187-0031 (JP); SUGIMURA, Takayuki, Kodaira-shi, Tokyo 187-0031 (JP); IWABUCHI, Yoshinori, Kodaira-shi, Tokyo 187-0031 (JP); SHIINO, Osamu, Kodaira-shi, Tokyo 187-0031 (JP); SUGIYAMA, Hideo, Kodaira-shi, Tokyo 187-0031 (JP); HORIKAWA, Yasuo, Kodaira-shi, Tokyo 187-0031 (JP); TOYOSAWA, Shinichi, Kodaira-shi, Tokyo 187-0031 (JP)
(74) Representative: Waldren, Robin Michael
(86) International application number: PCT/JP2003/009983
(87) International publication number: WO 2004/017452

(56) References cited:
- EP-A2- 1 087 412
- DE-A1- 10 046 388
- JP-A- 2002 075 480
- JP-A- 2002 184 478
- US-B1- 6 291 763

## Description

### FIELD OF THE INVENTION

The invention relates to an electrolyte for dye-sensitized solar cells and a dye-sensitized solar cell and, particularly, to a solid electrolyte to be used for dye-sensitized solar cells and a dye-sensitized solar cell provided with such a solid electrolyte.

### BACKGROUND OF THE INVENTION

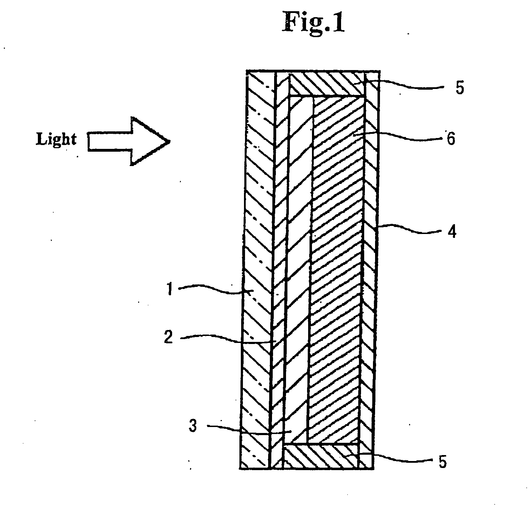

It is already known that an oxide semiconductor to which sensitizing dye is adsorbed is used as an electrode to manufacture a solar cell. Fig. 1 is a sectional view showing a general structure of such a dye-sensitized solar cell. As shown in Fig. 1, a transparent electrode 2 is formed on a substrate 1 such as a glass substrate and a semiconductor membrane 3 of metal oxide into which a spectral sensitizing dye is adsorbed is formed on the transparent electrode 2. A counter electrode 4 is provided to be spaced apart from and to face the transparent electrode 2 of the dye-sensitized semiconductor electrode. Further, the outer edge of the lamination is sealed by sealing material 5, and an electrolyte 6 is encapsulated between the dye-sensitized semiconductor electrode and the counter electrode 4. The dye-adsorbing semiconductor membrane 3 is normally a titanium oxide thin membrane to which a dye is adsorbed. The dye adsorbed to the titanium oxide thin membrane is excited by light in visible region. Electrons generated by the excitation are moved to titanium oxide microparticles, thereby generating electric power.

Since conventional electrolyte in dye-sensitized solar cells is normally liquid-type electrolyte which is made by dissolving oxidation-reduction substance into solvent, there is a problem of liquid leakage from a sealed portion. This affects the durability and reliability of dye-sensitized solar cells.

To solve this problem, it has been proposed to turn liquid-type electrolyte into pseudo solidified state by using any of various polymers to carry the liquid-type electrolyte. However, it is still desired to provide a solid electrolyte which works without loosing power generation efficiency of dye-sensitized solar cells and which is excellent in safety and durability and is low in price.

JP 2002 184478 discloses a photo electrochemical battery in which the electrolyte comprises a crosslinked polymer and a redox pair.

### OBJECT OF THE INVENTION

It is an object of the invention to provide a solid electrolyte for dye-sensitized solar cells which is effective for improving power generation efficiency, durability, and safety of dye-sensitized solar cells and which can be manufactured at a low cost and to provide a dye-sensitized solar cell using the solid electrolyte.

### SUMMARY OF THE INVENTION

An electrolyte for dye-sensitized solar cells of this invention is characterized in that an oxidation-reduction substance is carried by a vulcanized rubber, wherein the vulcanized rubber is manufactured using sulphur and/or an organic sulphur compound as a vulcanizing agent.

The oxidation-reduction substance is carried by a vulcanized rubber, thereby mimically solidifying the electrolyte. The electrolyte does not affect the power generation efficiency of a dye-sensitized solar cell, is excellent in safety and durability, and can be provided at a low cost.

A dye-sensitized solar cell of this invention comprises a dye-sensitized semiconductor electrode, a counter electrode arranged at an opposed position to the dye-sensitized semiconductor electrode, and a solid electrolyte arranged between the dye-sensitized semiconductor electrode and the counter electrode, wherein the solid electrolyte is an electrolyte for dye-sensitized solar cells according to the invention. Therefore, the dye-sensitized solar cell is excellent in power generation efficiency, safety and durability and can be provided at a low cost.

### BRIEF DESCRIPTION OF THE DRAWINGS

Fig. 1 is a sectional view showing a general structure of a dye-sensitized solar cell.

### DETAILED DESCRIPTION

Embodiments of electrolyte for dye-sensitized solar cells and embodiments of a dye-sensitized solar cell according to the invention will be described in detail.

In an electrolyte for dye-sensitized solar cells, as the rubber composition of vulcanized rubber carrying oxidation-reduction substance, natural rubbers (NR) and synthetic rubbers having a carbon-to-carbon double bond in its structural formula may be used alone or in a blended state of two or more. Exemplary synthetic rubbers include homopolymers of conjugated diene compounds such as isoprene, butadiene and chloroprene, for example, polyisoprene rubber (IR), polybutadiene rubber (BR), and polychloroprene rubber; copolymers of the aforementioned conjugated diene compounds with vinyl compounds such as styrene, acrylonitrile, vinylpyridine, acrylic acid, methacrylic acid, alkyl acrylates, and alkyl methacrylates, for example, styrene-butadiene copolymer rubber (SBR), vinylpyridine-butadiene-styrene copolymer rubber, acrylonitrile-butadiene copolymer rubber, acrylic acid-butadiene copolymer rubber, methacrylic acid-butadiene copolymer rubber, methyl acrylate-butadiene copolymer rubber, and methyl methacrylate-butadiene copolymer rubber; copolymers of olefins such as ethylene, propylene, and isobutylene with diene compounds (for example, isobutylene-isoprene copolymer rubber (IIR)); copolymers (EPDM) of olefins with unconjugated dienes (for example, ethylene-propylene-cyclopentadien-ternary copolymer, ethylene-propylene-5-ethylidene-2-norbornene ternary copolymer, and ethylene-propylene-1,4-hexadiene ternary copolymer); polyalkenamers resulting from ring-opening polymerization of cycloolefins (for example, polypentenamer); rubbers resulting from ring-opening polymerization of oxirane rings (for example, sulfur-vulcanizable polyepichlorohydrin rubber); and polypropylene oxide rubber. Also included are halogenated products of the foregoing various rubbers, for example, chlorinated isobutylene-isoprene copolymer rubbers (Cl-IIR) and brominated isobutylene-isoprene copolymer rubbers (Br-IIR). Ring-opened polymers of norbornene are also useful. Additionally, useful blended rubbers are blends of the foregoing rubbers with saturated elastomers such as epichlorohydrin rubber, polypropylene oxide rubber, and chlorosulfonated polyethylene.

The vulcanized rubber is manufactured by vulcanizing and cross-linking the rubber composition by vulcanizing agent. As the vulcanizing agent, sulfur and/or an organic sulfur compound is used. The vulcanizing agent is preferably used in an amount of from 0.01 to 10 parts, more preferably from 0.1 to 6 parts by weight per 100 parts by weight of the aforementioned rubber component.

For vulcanization, the rubber composition may also contain a vulcanization promoter, such as aldehyde ammonias, aldehyde amines, guanidines, thioureas, thiazoles, dithiocarbamates, xanthates, and thirams, preferably in an amount of from 0.01 to 10 parts, more preferably from 0.1 to 5 parts by weight per 100 parts by weight of the aforementioned rubber component. Further, the rubber composition may also contain a vulcanization promoter aid such as zinc flower and stearic acid, preferably in an amount of from 0.1 to 10 parts, more preferably from 0.5 to 5 parts by weight per 100 parts by weight of the aforementioned rubber component.

In the vulcanized rubber, it is preferable to blend oil such as paraffinic, naphthenic and aromatic process oils, ethylene-α-olefin co-oligomers, mineral oils such as paraffin wax and liquid paraffin, and vegetable oils such as castor oil, cottonseed oil, linseed oil, colza oil, soybean oil, palm oil, coconut oil, and peanut oil. The addition of such oil is effective for improving workability of rubber. The amount of oil blended is preferably about 3 to 50 parts, especially about 4 to 10 parts by weight per 100 parts by weight of the rubber component.

In the vulcanized rubber, a filler such as carbon black, silica, calcium carbonate, calcium sulfate, clay and mica may be added in accordance with a particular purpose and application according to the ordinary method. The amount of the filler(s) is preferably from 0.5 to 20 parts, more preferably from 1 to 10 parts by weight per 100 parts by weight of the rubber component.

The vulcanized rubber can be made by heating the rubber composition prepared by mixing the aforementioned components under pressure to achieve vulcanization.

Other than the vulcanization using sulfur vulcanizing agent, organic sulfur vulcanization using organic sulfur compounds such as dithiomorpholine and thiuram vulcanizing agents may be employed. The vulcanization using sulfur vulcanizing agent is most preferable because the sulfur vulcanizing agent hardly reacts with iodine as oxidation-reduction substance. In this case, the content of sulfur or sulfur in organic sulfur compound is preferably 0.5 to 7 parts, especially 1 to 6 parts by weight per 100 parts by weight of the rubber component.

As the vulcanized rubber to be used in the invention, a vulcanized rubber having, as side chains, an aromatic ring, for example, especially a benzene ring or a pyridine ring is preferably used in order to exhibit the effect of increasing the conductivity. Therefore, it is preferable to use a rubber component containing a copolymer component such as styrene or vinylpyridine in order to achieve introduction of such an aromatic ring.

The content of the aromatic ring such as a benzene ring or pyridine ring in the vulcanized rubber is preferably from 5 to 50% by weight relative to the entire rubber component. When the amount is less than 5% by weight, sufficient effect of improving conductivity can not be obtained. On the other hand, when the amount is more than 50% by weight, a hard and brittle membrane having poor toughness is formed.

In the invention, an oxidation-reduction substance is carried by the vulcanized rubber. To carry oxidation-reduction substance on the vulcanized rubber, for example, the vulcanized rubber is soaked in a solution of the oxidation-reduction substance so that the vulcanized rubber is impregnated with the oxidation-reduction substance solution and, after that, is dried.

In the invention, oxidation-reduction substance to be carried by the vulcanized rubber (hereinafter, this will be sometimes referred to as "carrier") is not particularly limited and thus may be any which can be generally used in a buttery or a solar cell. Preferable examples of the oxidation-reduction substance include combinations of metal iodide and iodine such as LiI, NaI, KI, and CaI₂, or combinations of metal bromide and bromine such as LiBr, NaBr, KBr, and CaBr₂. Particularly preferable examples among these are combination of metal iodide and iodine.

The concentration of the oxidation-reduction substance in the oxidation-reduction substance solution to be used for impregnation into the carrier is preferably in a range of from 0.01 to 1 mol/liter, particularly from 0.05 to 0.5 mol/liter.

Examples of the solvent include carbonate compounds such as propylene carbonate, nitrile compounds such as acetonitrile, alcohols such as ethanol as well as water and aprotic polar substance. Particularly preferable examples among these are carbonate compounds and nitrile compounds.

When the carrier is soaked in such an oxidation-reduction substance solution, it requires about 5 hours for soaking. It is preferable to set the soaking temperature high because the oxidation-reduction substance solution is activated to speed up the soaking, thereby shortening the period of time for making the electrolyte. The soaking temperature is required to be set not to cause radical reaction and is concretely in a range of from 35°C to 65°C.

The period of time for drying after the soaking is preferably in a range of from 0.5 to 1 hour.

In the electrolyte for dye-sensitized solar cells of the invention thus obtained, the amount of the oxidation-reduction substance carried by the carrier is preferably 5% by weight or more because, when the amount of the oxidation-reduction substance carried by the carrier is too small, the function of the electrolyte should be poor. Since, when this amount is excessively large, the oxidation-reduction substance carried may bleed from the carrier, the strength of the carrier may be poor, and the carrier may be deteriorated, it is detrimental to handling during the cell assembly. Therefore, the amount of the oxidation-reduction substance carried by the vulcanized rubber, the phosphazene polymer, or the EVA resin film is normally preferably from 10% to 30% by weight. On the other hand, the amount of the oxidation-reduction substance carried by the porous body is normally preferably from 5% to 90% by weight.

The dye-sensitized solar cell of the invention uses, as its electrolyte, the electrolyte for dye-sensitized solar cells of the invention. The structure other than the electrolyte of the dye-sensitized solar cell is the same as a conventional dye-sensitized solar cell as shown in Fig. 1.

As a substrate 1 for the dye-sensitized solar cell, normally a glass plate such as a silicate glass is normally used and any of various plastic substrates capable of ensuring optical transparency of a visible light may be also used. The thickness of the substrate is generally from 0.1 mm to 10 mm, preferably from 0.3 mm to 5 mm. As the glass plate, a glass plate which is chemically or thermally reinforced is preferable.

As a transparent electrode 2, a substrate with a thin membrane of conductive metal oxide such as In₂O₃ and SnO₂ or a substrate made of a conductive material such as metal may be employed. Examples of preferable conductive metal oxides include In₂O₃: Sn(ITO), SnO₂:Sb, SnO₂:F, ZnO:Al, ZnO:F, and CdSnO₄.

As a metal oxide semiconductor of a metal oxide semiconductor membrane 3 into which a spectral sensitizing dye is adsorbed, one or more of known semiconductors such as titanium oxide, zinc oxide, tungsten oxide, antimony oxide, niobium oxide, indium oxide, barium titanate, strontium titanate, and cadmium sulfide. Particularly, titanium oxide is preferable in terms of stability and safety. Exemplary titanium oxides include titanium oxides such as anatase-type titanium dioxide, rutile type titanium dioxide, amorphous titanium oxide, metatitanic acid, and orthotitanic acid, titanium hydroxide, and hydrous titanium oxide. In the present invention, particularly preferable example is anatase-type titanium dioxide. The metal oxide semiconductor membrane preferably has a fine crystal structure. It is also preferable that the metal oxide semiconductor membrane is porous. The thickness of the metal oxide semiconductor membrane is generally 10 nm or more, preferably from 100 to 1000 nm.

The organic dye (spectral sensitizing dye) to be adsorbed in the oxide semiconductor membrane may be one or more of various metal complexes and organic dyes having adsorptive property in visible light range and/or infrared light range. The spectral sensitizing dyes having functional groups such as carboxyl group, hydroxyalkyl group, hydroxyl group, sulfonic group, and carboxyalkyl group in their molecules are preferable because they are quickly adsorbed into semiconductors. The metal complexes are preferable because they are excellent in effect of spectral sensitization and durability. Examples which may be used as the metal complex are complexes of metal phtalocyanines such as copper phthalocyanine and titanyl phthalocyanine, chlorophyll, hemin, ruthenium described in JP H01-220380A or JP H05-504023A, osmium, iron, and zinc. Examples which may be used as the organic dye are metal-free phthalocyanine, cyanine dyes, merocyanine dyes, xanthene dyes, and triphenylmethane dyes. Specific examples of cyanine dyes include NK1194 and NK3422 (both available from Hayashibara Biochemical Laboratories, Inc.). Specific examples of merocyanine dyes include NK2426 and NK2501 (both available from Hayashibara Biochemical Laboratories, Inc.). Specific examples of xanthene dyes include Uranine, Eosine, rose Bengal, rhodamine B, and Dibromofluorescein. Specific examples of triphenylmethane dyes include malachite green and crystal violet.

To adsorb the organic dye (spectral sensitizing dye) to the semiconductor membrane, organic dye solution is prepared by dissolving the organic dye in organic solvent, and the oxide semiconductor membrane is soaked together with the substrate in the organic dye solution at ordinary temperature or under heated condition. The solvent of the organic solution may be any of solvents capable of dissolving the used spectral sensitizing dye. Specific examples of such a solvent include water, alcohol, toluene, and dimethylformamide.

The dye-sensitized semiconductor electrode is manufactured by applying a transparent electrode (transparent conductive membrane) 2 as a coating on the substrate 1, forming a semiconductor membrane for photoelectric conversion material on the transparent electrode 2, and adsorbing the dye to the semiconductor membrane. Another substrate such as a glass plate, which is coated with a transparent conductive membrane, as a counter electrode 4 is bonded to the dye-sensitized semiconductor electrode by sealing material 5. The electrolyte 6 of the invention is encapsulated between the electrodes, thereby forming a solar cell of the present invention.

The thickness of the electrolyte depends on the specification of the dye-sensitized solar cell and is normally in a range of from 0.01 to 0.3 mm.

The counter electrode 4 may be any of conductive materials. It is preferable to use, as the counter electrode 4, a conductive material having catalytic power to conduct reductive reaction of oxidized redox ion such as I₃⁻ ion of the electrolyte at a sufficient high speed. Examples of such a conductive material include a platinum electrode, a conductive material having a platinized surface or a surface with platinum deposition, rhodium metal, ruthenium metal, ruthenium oxide, carbon, cobalt, nickel, and chromium.

Though the dye-sensitized semiconductor electrode, the electrolyte, and the counter electrode are housed in a casing and then sealed in the dye-sensitized solar cell of the invention, these may be sealed entirely with resin. In this case, the resin sealing is designed so that the dye-sensitized semiconductor electrode is exposed to light. In the cell having such a structure, as sun light or visible light similar to the sun light is incident on the dye-sensitized semiconductor electrode, a potential difference is generated between the dye-sensitized semiconductor electrode and the counter electrode so that current flows between the electrodes.

### (Examples of the invention)

### Example 1-1

### [Production of electrolyte]

A rubber composition consisting of the following components were heated at 150 ° C under pressure of 10 MPa so as to obtain a vulcanized rubber.

### < Rubber composition (parts) >

Rubber component (vinylpyridine rubber) : 100
(20 wt% stylene, 20 wt% vinylpyridine, 60 wt% butadiene)
Sulfur: 2
Oil: 5
Vulcanization accelerator (Nocceller M) : 2
Zinc flower: 3
Carbon black (SAF) : 20

The obtained vulcanized rubber was cut into a piece of 5 mm × 5 mm x 0.1 mm. The piece was soaked in the following oxidation-reduction substance solution at a room temperature for 6 hours so that the vulcanized rubber was impregnated with the oxidation-reduction substance solution, thereby obtaining an electrolyte for dye-sensitized solar cells of the present invention. Before use, the electrolyte was dried in the atmosphere to evaporate a low boiling point solvent (acetonitrile and the like). The electrolyte was sandwiched between electrodes while viscosity remains on the rubber surface.

### [Oxidation-reduction substance solution]

Solvent: acetonitrile : 1L

### Oxidation-reduction substance

Lithium iodide : 0.2 mole
1,2 dimethyl-3-propylimidazolium iodide : 0.2 mole
Iodine : 0.1 mole
t-butylpyridine : 0.4 mole

The amount of the oxidation-reduction substance carried by the vulcanized rubber was 15% by weight.

### [Production of dye-sensitized solar cell]

An ITO membrane having a thickness of 3000Å was formed on a glass substrate (thickness: 2mm) of 2.5 × 3 cm. A titanium oxide thin membrane having a thickness of 10 m and an area of 5 mm × 5 mm was formed on the ITO membrane.

A solution was prepared by dissolving cis-di(thiocyanato)-bis (2,2'-bipyridyl-4-dicarboxylate-4'-tetrabutylammonium carboxylate) ruthenium(II) as spectral sensitizing dye into ethanol solvent at a rate of 3 × 10⁻⁴ mole/L. The substrate having the titanium oxide membrane formed thereon was entered into the solution and was soaked at a room temperature for 18 hours, thereby obtaining a dye-sensitized semiconductor electrode. The adsorptive amount of the spectral sensitizing dye was 10 µg per 1 cm² specific area of the titanium oxide membrane.

As a counter electrode, a transparent conductive glass plate coated with fluorine-doped tin oxide and carrying platinum thereon was used. The aforementioned electrolyte was sandwiched between the two electrodes. The sides of the lamination were sealed by resin and lead wires were attached, thereby producing a dye-sensitized solar cell of the present invention.

As light with intensity of 100W/m² was incident on the obtained dye-sensitized solar cell by a solar simulator, Voc (voltage in open-circuit) was 0.72V, Jsc (density of current flowing in short-circuit) was 9.5 mA/cm², FF (fill factor) was 0.52, η(conversion efficiency) was 4.5%. From the results, it was confirmed that the dye-sensitized solar cell is useful.

## Claims

1. An electrolyte for dye-sensitized solar cells, wherein an oxidation-reduction substance is carried by a vulcanized rubber, **characterized in that** the vulcanized rubber is manufactured using sulfur and/or an organic sulfur compound as a vulcanizing agent.

2. An electrolyte for dye-sensitized solar cells as claimed in claim 1, wherein the vulcanized rubber has, as side chains, an aromatic ring.

3. An electrolyte for dye-sensitized solar cells as claimed in claim 2, wherein the aromatic ring is a benzene ring and/or a pyridine ring.

4. An electrolyte for dye-sensitized solar cells as claimed in any one of claims 1 through 3, wherein the vulcanized rubber is impregnated with a solution of the oxidation-reduction substance and is dried, thereby carrying the oxidation-reduction substance.

5. An electrolyte for dye-sensitized solar cells as claimed in any one of claims 1 through 4, wherein the carried amount of the oxidation-reduction substance is from 5 to 50% by weight relative to the vulcanized rubber.

6. A dye-sensitized solar cell comprising a dye-sensitized semiconductor electrode, a counter electrode arranged at an opposed position to the dye-sensitized semiconductor electrode, and a solid electrolyte arranged between the dye-sensitized semiconductor electrode and the counter electrode, wherein the solid electrolyte is an electrolyte for dye-sensitized solar cells as claimed in any one of claims 1 through 5.

## Patentansprüche

1. Elektrolyt für Farbstoff-Solarzellen, worin eine Redox-Substanz durch einen vulkanisierten Gummi getragen wird,
**dadurch gekennzeichnet, dass** der vulkanisierte Gummi unter Verwendung von Schwefel und/oder einer organischen Schwefelverbindung als Vulkanisationsmittel hergestellt wird.

2. Elektrolyt für Farbstoff-Solarzellen nach Anspruch 1, worin der vulkanisierte Gummi als Seitenketten einen aromatischen Ring hat.

3. Elektrolyt für Farbstoff-Solarzellen nach Anspruch 2, worin der aromatische Ring ein Benzenring und/oder Pyridinring ist.

4. Elektrolyt für Farbstoff-Solarzellen nach einem der Ansprüche 1 bis 3, worin der vulkanisierte Gummi mit einer Lösung der Redox-Substanz imprägniert wird und getrocknet wird, wodurch er die Redox-Substanz trägt.

5. Elektrolyt für Farbstoff-Solarzellen nach einem der Ansprüche 1 bis 4, worin die getragene Menge der Redox-Substanz 5 bis 50 Gewichtsprozent relativ zum vulkanisierten Gummi beträgt.

6. Farbstoff-Solarzelle, umfassend: eine farbstoffsensibilisierte Halbleiterelektrode, eine Gegenelektrode, die an einer der farbstoffsensibilisierten Halbleiterelektrode gegenüberliegenden Position angeordnet ist, und einen Festelektrolyten, der zwischen der farbstoffsensibilisierten Halbleiterelektrode und der Gegenelektrode angeordnet ist, worin der Festelektrolyt ein Elektrolyt für Farbstoff-Solarzellen nach einem der Ansprüche 1 bis 5 ist.

## Revendications

1. Électrolyte pour cellules à pigment photosensible, dans lequel une substance d'oxydoréduction est portée par un caoutchouc vulcanisé,
**caractérisé par le fait que** le caoutchouc vulcanisé est fabriqué en utilisant du soufre et/ou un composé organosulfuré en tant qu'agent de vulcanisation.

2. Électrolyte pour cellules à pigment photosensible selon la revendication 1, dans lequel le caoutchouc vulcanisé comprend, en tant que chaînes latérales, un cycle aromatique.

3. Électrolyte pour cellules à pigment photosensible selon la revendication 2, dans lequel le cycle aromatique est un cycle benzénique et/ou un cycle pyridique.

4. Électrolyte pour cellules à pigment photosensible selon l'une quelconque des revendications 1 à 3, dans lequel le caoutchouc vulcanisé est imprégné d'une solution de la substance d'oxydoréduction et est séché, devenant ainsi porteur de la substance d'oxydoréduction.

5. Électrolyte pour cellules à pigment photosensible selon l'une quelconque des revendications 1 à 4, dans lequel la quantité portée de la substance d'oxydoréduction représente de 5 à 50% en poids par rapport au caoutchouc vulcanisé.

6. Cellule à pigment photosensible comprenant une électrode semi-conductrice sensibilisée aux colorants, une contre-électrode placée à l'opposé de l'électrode semi-conductrice à pigment photosensible et un électrolyte solide disposé entre l'électrode semi-conductrice à pigment photosensible et la contre-électrode, dans laquelle l'électrolyte solide est un électrolyte pour cellules à pigment photosensible selon l'une quelconque des revendications 1 à 5.
